# EUROPEAN PATENT APPLICATION

(11) **EP 1 166 642 A1**
(43) Date of publication of application: **02.01.2002**
(21) Application number: 00113024.4
(22) Date of filing: 21.06.2000
(51) Int. Cl.: A23G 9/28

(54) **Frozen dessert dispenser**

(71) Applicant: Hoshizaki Denki Co., Ltd., Toyoake-shi, Aichi (JP)
(72) Inventor: Iwata, Tsutomu, Yatsuka-gun, Shimane (JP); Ishihara, Michiharu, Ohara-gun, Shimane (JP)
(74) Representative: Müller-Boré & Partner Patentanwälte

(57) **Abstract**

A frozen dessert dispenser includes a cylinder (12) provided in a cold storage compartment (2), a piston (13) slidably mounted in the cylinder (12) so as to divide its interior into an accommodating chamber (16) accommodating frozen dessert (A) and a pressure chamber (17), a fluid supplying element (27) for supplying an operating fluid (X) into the pressure chamber (17) so that the piston (13) is subjected to the pressure in the pressure chamber (17) to be moved, thereby dispensing the ice cream (A) from the accommodating chamber (16), piston position detecting means (36) for detecting the piston (13) assuming a predetermined forward position, thereby delivering a position signal, a warning element (32) for warning to prompt re-supply of frozen dessert (A) into the accommodating chamber (16) on the basis of the position signal delivered by the piston position detecting element (36), a re-supply detecting element (39) for detecting re-supply of frozen dessert (A) into the accommodation chamber (16), thereby delivering an operation signal, and a fluid sucking element (27) for sucking the operating fluid (X) from the pressure chamber (17) for moving back the piston (13) when receiving the operation signal from the re-supply detecting element (39) on condition that the position signal has been delivered by the piston position, detecting element (36).

## Description

This invention relates to a frozen dessert dispenser for dispensing frozen dessert such as ice cream or frozen yogurt.

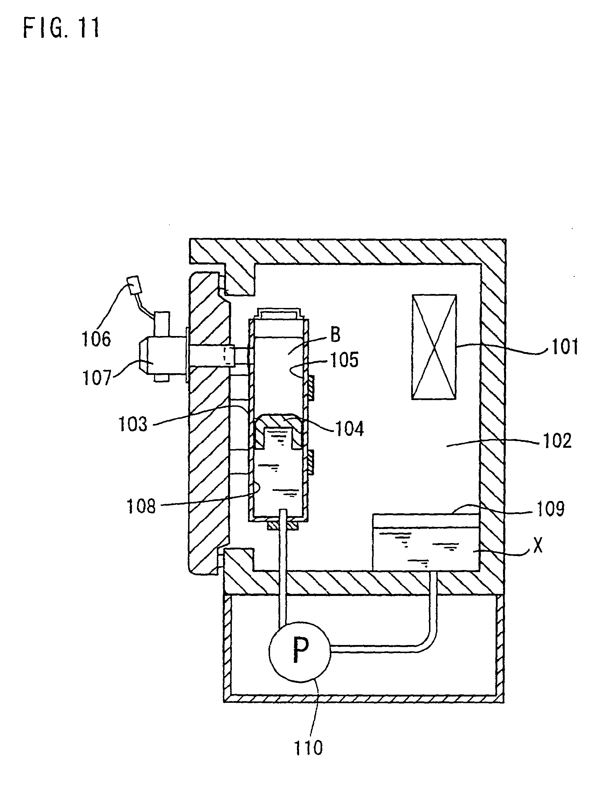

The prior art has provided an ice cream dispenser as shown in FIG. 11. The shown dispenser comprises a dispensing cylinder 103 mounted in vertical disposition in a freezing compartment 102 provided with an evaporator 101. A piston 104 is provided in the dispensing cylinder 103 so as to be slid. Part of the interior of the cylinder 103 over the piston 104 serves as an accommodating chamber 105 for accommodating a pack B of ice cream. The accommodating chamber 105 communicates with a dispensing section 107 including a cock 106. Part of the interior of the cylinder 103 below the piston 104 serves as a pressure chamber 108 which is connected via a reversible pump 110 to a tank 109 storing brine X (antifreezer). When the cock 106 is opened and a dispensing switch (not shown) is turned on, the reversible pump 110 is normally driven to supply the brine X into the pressure chamber 108. The piston 104 is subjected to pressure to be raised such that the pack B is compressed, whereupon ice cream is dispensed from the dispensing section 107.

The pack B needs to be replaced by another one when all the ice cream in it has been used up. In Japanese unexamined patent publication No. 10-155426A, the applicant of the present application proposed a frozen dessert dispenser in which a time for replacement of the pack can be informed of and the replacement can efficiently be carried out. In the proposed dispenser, a float switch is provided in the lower interior of the tank 109 storing the brine X. The liquid level of the brine X is lowered with supply of the brine X into the pressure chamber 108. It is assumed that the piston 104 is moved to an upper end position when the float switch is turned on. When the float switch delivers an ON signal, a pack replacement lamp is turned on and the reversible pump 110 is reversely driven so that the brine X in the pressure chamber 108 is drawn into the tank 109. As a result, since the piston 104 is descended such that the capacity of the accommodating chamber 105 is increased, the pack B can quickly be replaced by a new one.

The pack replacement lamp is turned on in order that a worker may previously be informed of the time for replacement. In view of error in the position of the piston 104, the pack replacement lamp is desirably controlled to be turned on slightly before the piston 104 reaches the upper end position. However, in the above-described dispenser, the piston 104 is controlled to be descended simultaneously when the pack replacement lamp is turned on. In this case, the pack B must be replaced by a new one although it still contains ice cream to be dispensed at several times. Thus, the ice cream left in the pack B is wasted.

Therefore, an object of the present invention is to provide a frozen dessert dispenser the piston can automatically be moved backward at a suitable time so that the capacity of the accommodating chamber is increased.

To achieve the object, the present invention provides a frozen dessert dispenser which comprises a cylinder provided in a cold storage compartment, a piston slidably mounted in the cylinder so as to divide an interior thereof into an accommodating chamber accommodating frozen dessert and a pressure chamber, and fluid supplying means for supplying an operating fluid into the pressure chamber so that the piston is subjected to the pressure in the pressure chamber to be moved, thereby dispensing the ice cream from the accommodating chamber, characterized by piston position detecting means for detecting the piston assuming a predetermined forward position, thereby delivering a position signal, warning means for warning to prompt re-supply of frozen dessert into the accommodating chamber on the basis of the position signal delivered by the piston position detecting means, re-supply detecting means for detecting re-supply of frozen dessert into the accommodating chamber, thereby delivering an operation signal, and fluid sucking means for sucking the operating fluid from the pressure chamber for moving back the piston when receiving the operation signal from the re-supply detecting means on condition that the position signal has been delivered by the piston position detecting means.

The warning means performs a warning operation to urge re-supply of the frozen dessert when the piston position detecting means detects the piston assuming the predetermined forward position with execution of dispense of the frozen dessert. Thereafter, when the frozen dessert is re-supplied into the accommodating chamber, the re-supply detecting means delivers the operation signal to the fluid sucking means, which sucks the operating fluid from the pressure chamber such that the piston is returned, whereupon the capacity of the accommodating chamber can be increased.

When the position of the piston detected by the piston position detecting means is set at one slightly before which the frozen dessert is dispensed up, the frozen dessert can be dispensed up when the dispensing operation is continued after approach to the time of re-supply of frozen dessert has been confirmed by the warning means. The piston is automatically returned upon work prior to re-supply of frozen dessert. Consequently, the following re-supply of frozen dessert can promptly be carried out. In other words, the frozen dessert can efficiently be re-supplied without wasteful use thereof.

In a preferred form, the frozen dessert dispenser is further characterized by a door hingedly mounted to close and open the cold storage compartment, and characterized in that the re-supply detecting means comprises a door switch for detecting an open or closed state of the door, and that the fluid sucking means is operated when receiving an open state signal from the door switch.

The door switch delivers the open state signal when the door is opened in order that the frozen dessert may be re-supplied. In response to the signal, the fluid sucking means is operated to return the piston such that the capacity of the accommodating chamber can be increased.

In another preferred form, the frozen dessert dispenser is characterized in that the cylinder includes a lid detachably attached to an open end thereof at the accommodating chamber side so as to close and open the end, that the re-supply detecting means comprises a lid switch for detecting a closed or open state of the lid, and that the fluid sucking means is operated when receiving an open state signal from the lid switch.

The lid switch delivers the open state signal when the lid is opened in order that the frozen dessert may be re-supplied. In response to the signal, the fluid sucking means is operated to return the piston such that the capacity of the accommodating chamber can be increased.

In further another preferred form, the frozen dessert dispenser is characterized by a tank for storing the operating fluid and in that the operating fluid is a liquid supplied from the tank into the pressure chamber and that the piston position detecting means comprises a float switch provided in the tank.

The operating liquid is sequentially supplied from the tank into the pressure chamber. When the float switch detects the reduction to the predetermined level of the liquid in the tank, the piston is considered to assume a predetermined forward position.

The invention will be described, merely by way of example, with reference to the accompanying drawings, in which:
FIG. 1 is a longitudinal side section of the ice cream dispenser of a first embodiment in accordance with the present invention;
FIG. 2 is a perspective view of the freezer of the dispenser with a heat-insulated door thereof being opened;
FIG. 3 is a longitudinal side section of the dispenser, showing the relationship between the level of the brine and the position of the piston;
FIG. 4 is a perspective view of the door switch;
FIG. 5 is a block diagram of the control mechanism;
FIG. 6 is a flowchart showing the dispensing routine;
FIG. 7 is an exploded perspective view of an upper end of the cylinder and a lid in the ice cream dispenser of a second embodiment in accordance with the present invention;
FIGS. 8A and 8B are plan views of the lid in the attached state and the normally closed state respectively;
FIG. 9 is a block diagram of the control mechanism;
FIG. 10 is a flowchart showing the dispensing routine; and
FIG. 11 is a longitudinal side section of a conventional ice cream dispenser.

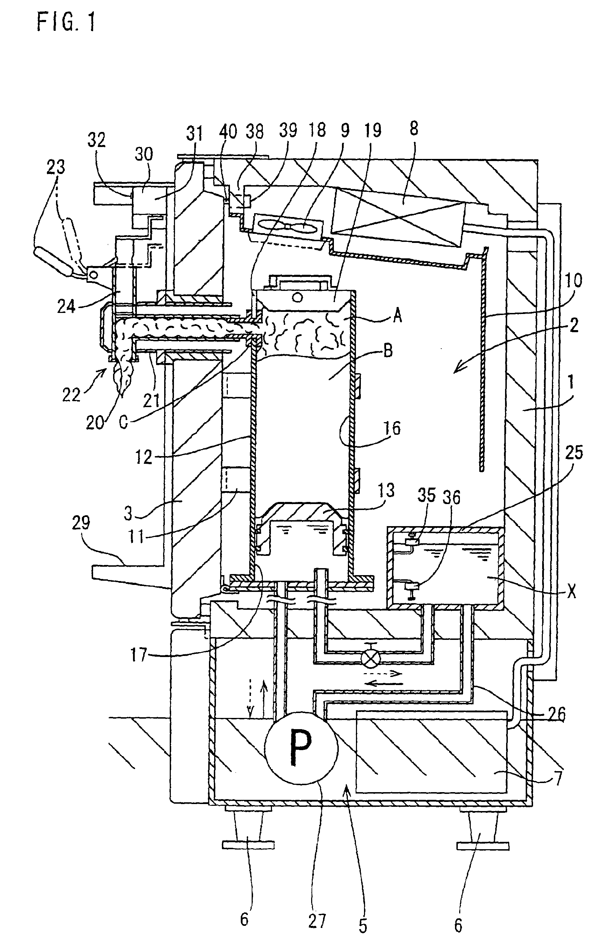

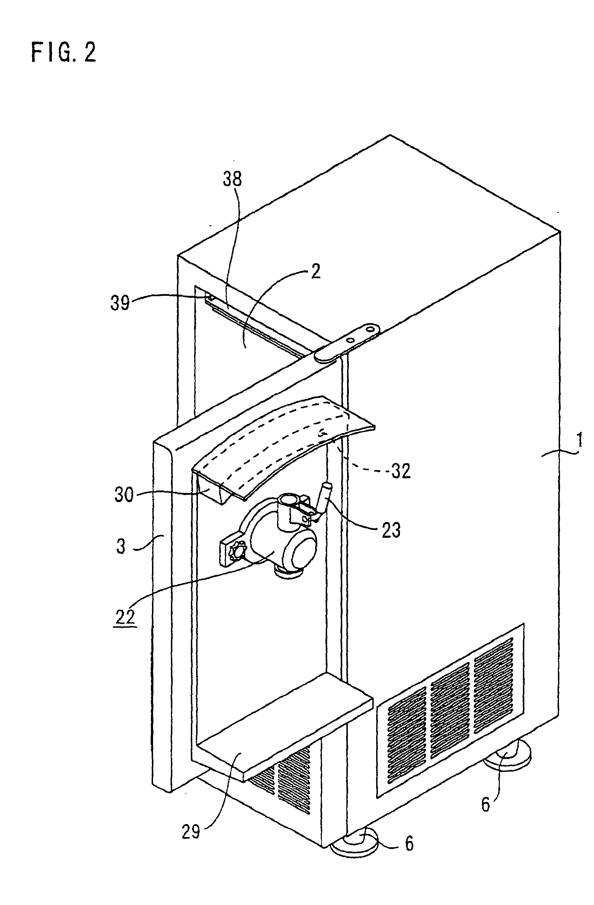

Two embodiments of the present invention will be described with reference to the drawings. The invention is applied to an ice cream dispenser in each embodiment. FIGS. 1 to 6 illustrate a first embodiment. Referring to FIGS. 1 and 2, the ice cream dispenser comprises a freezer 1 comprising a heat-insulated housing. The freezer 1 has an interior defined as a freezing compartment 2. A heat-insulated door 3 is hingedly mounted on the heat-insulated housing so as to close and open a front opening of the heat-insulated housing. A machine compartment 5 is provided under a bottom of the heat-insulated housing. Four legs 6 are mounted on corners of the underside of the machine compartment 5 respectively so as to support the dispenser. A refrigeration unit 7 is provided in the machine compartment 5. An evaporator 8 and a fan 9 are provided on the ceiling of the freezing compartment 2. The evaporator 8 is connected to the refrigeration unit 7. Air in the freezing compartment 2 is sucked in through a duct 10 provided in the rear interior of the freezing compartment 2 and supplied to the evaporator 8 for heat exchange. The air is changed to cold air while passing through the evaporator 8. The cold air is circulated by the fan 9 into the freezing compartment 2. A temperature in the freezing compartment 2 is maintained at such a value that ice cream can be preserved while being able to be dispensed.

A dispensing cylinder 12 is mounted via mounting members 11 on the back of the heat-insulated door 3 in a vertical disposition in the freezing compartment 2. A piston 13 is provided in the cylinder 12 so as to be slid. An operating fluid such as brine X (antifreezer) is used to drive the piston 13. The piston 13 divides the interior of the cylinder 12 into an upper pack-accommodating chamber 16 and a lower pressure chamber 17. The cylinder 12 has a generally U-shaped groove 18 formed in an upper side thereof confronting the heat-insulated door 3 so as to extend downward from an upper edge thereof. A flexible pack B filled with ice cream A is accommodated in the pack-accommodating chamber 16. The pack B has a supply opening C which is fitted in the U-shaped groove 18 when the pack is accommodated in the chamber 16. The brine X is supplied into and sucked from the pressure chamber 17. The pack-accommodating chamber 16 has an upper opening. A lid 19 is detachably mounted on the cylinder 12 so as to close the upper opening of the chamber 16. A dispensing pipe 21 extends horizontally through a hole formed through the heat-insulated door 3. The dispensing pipe 21 has an inner end connected to the supply opening C of the pack B and an outer projecting end at which a dispensing section 22 is formed. A cock 23 is operated to operate a valve element 24 so that a dispensing port 20 is opened and closed.

A tank 25 storing the brine X is provided on the rear bottom of the freezing chamber 2. A brine passage 26 connects the tank 25 to the pressure chamber 17 of the cylinder 12. A reversible pump 27 is provided in the middle of the brine passage 26. The pump 27 is disposed in the machine compartment 5. When the pump 27 is normally driven, the brine X is supplied from the tank 25 into the pressure chamber 17 as shown by solid-line arrows in FIG. 1. On the other hand, when the pump 27 is reversely driven, the brine X is sucked from the pressure chamber 17 to be returned into the tank 25 as shown by broken-line arrows in FIG. 1.

An operation panel 30 is mounted on an upper front of the heat-insulated door 3. The operation panel 30 includes a dispensing switch 31 turned on and off when the aforesaid cock 23 is raised and lowered. More specifically, the dispensing switch 31 is turned on when the cock 23 is lowered to thereby open the dispensing port 20 as shown by solid line in FIG. 1. The operation panel 30 further includes a pack replacement lamp 32 mounted thereon so as to be viewable as shown by chain line in FIG. 2. A table 29 is provided on the front of the heat-insulated door 3 so as to be located below the dispensing section 22. A container in which dispensed ice cream is received is placed on the stand 29.

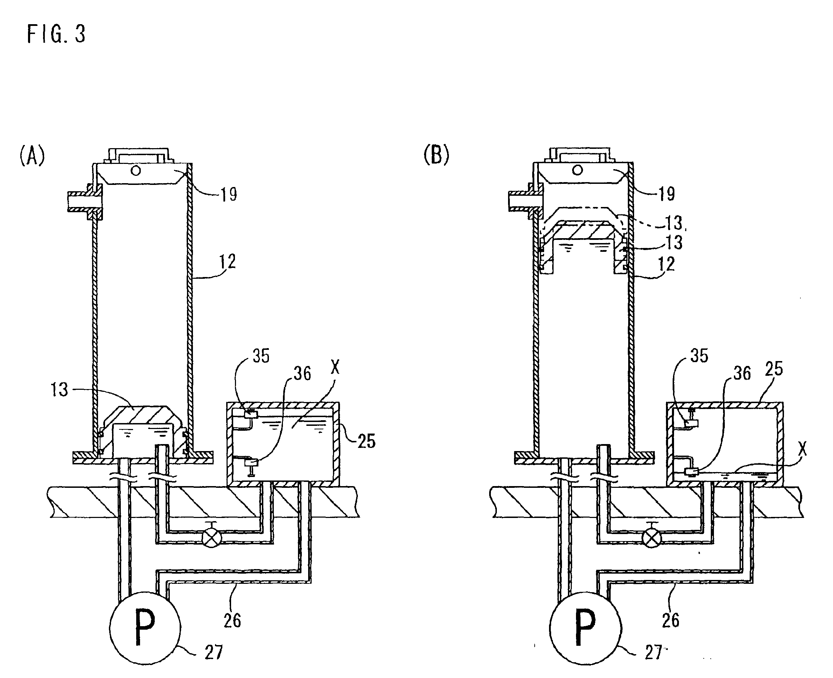

In the embodiment, means is provided for automatically descending the piston 13 to increase the capacity of the pack-accommodating chamber 16 when the ice cream A has been dispensed out. The structure of the means will be described. A pair of upper and lower float switches 35 and 36 are provided in the tank 25 for detecting the liquid level of the brine X. The upper float switch 35 detects the liquid level of the brine X when the piston 13 assumes a lower end position in the dispensing cylinder 12 as shown in FIG. 3A. On the other hand, the piston 13 reaches an upper end position as shown by chain line in FIG. 3B when the ice cream A in the pack B has been dispensed out. The lower float switch 36 detects the liquid level of the brine X when the piston 13 assumes an upper detection position lower by a predetermined distance than the upper end position. The upper detection position is shown by solid line in FIG. 3B.

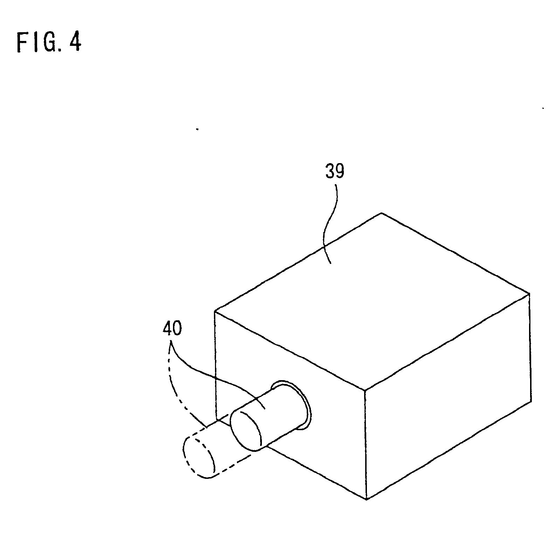

A vertical wall 38 is provided on a front edge of the ceiling of the freezing compartment 2. The vertical wall 38 has a door switch 39 mounted thereon so as to confront the backside of the heat-insulated door 3. The door switch 39 includes an actuator 40 normally urged forward as shown in FIG. 4. When the door 3 is closed, the actuator 40 is depressed to be moved back such that the door switch 39 is turned on.

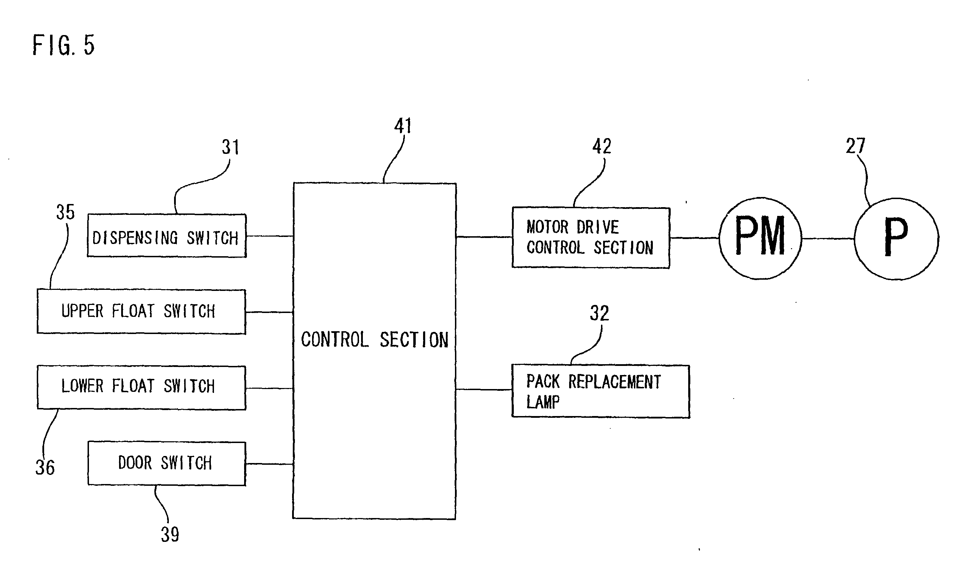

The ice cream dispenser includes a control section 41 including a microcomputer as shown in FIG. 5. The dispensing switch 31, the upper and lower float switches 35 and 36, and the door switch 39 are connected to an input side of the control section 41. A pump motor PM is connected via a motor drive control section 42 to an output side of the control section 41. The pack replacement lamp 32 is also connected to the output side of the control section 41.

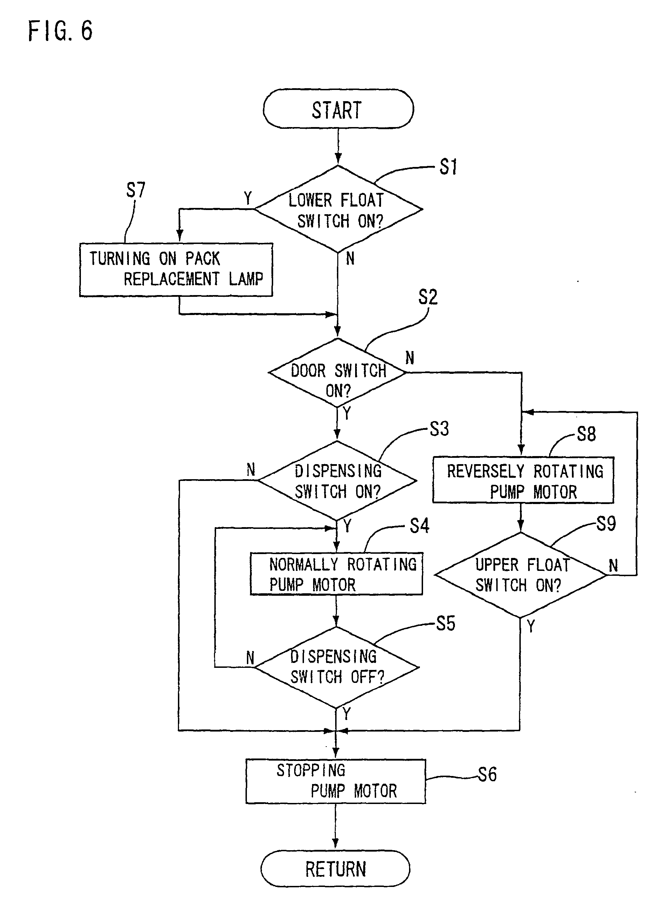

The operation of the ice cream dispenser will now be described. The control section 41 carries out a dispensing routine as shown in the flowchart of FIG. 6. To dispense the ice cream A, an operator prepares a suitable container and operates the cock 23 so that the dispensing port 20 is opened. With this, the dispensing switch 31 is turned on (YES at step S3) when the piston 13 assumes a position lower than the upper detection position (NO at step S1) and the door 3 is closed (YES at step S2). As a result, the pump motor PM is normally rotated at step S4 to drive the pump 27 in the normal direction, whereupon the brine X is pumped up from the tank 25 to be supplied into the pressure chamber 17 of the dispensing cylinder 12 and pressurized. Pressurization causes the piston 13 to move upward or ascend such that the pack B is compressed by the piston. Consequently, the ice cream A is dispensed from the port 20 into the container.

The cock 23 is operated in the closing direction as shown in chain line in FIG. 1 when a desired amount of ice cream is dispensed. The dispensing switch 31 is turned off (YES at step S5). The pump motor PM and accordingly the pump 27 are stopped at step S6, whereby dispensing is completed. The port 20 is then closed. The above-described operation is repeated so that the ice cream A is sequentially dispensed. As the dispensing of the ice cream A is repeated, the piston 13 moves upward or ascends in the cylinder 12. When the piston 13 reaches the upper detection position as shown by solid line in FIG. 3B, the liquid level of the brine X in the tank 25 is decreased to a position as shown in FIG. 3B. In response to the decrease in the liquid level, the lower float switch 36 is turned on (YES at step S1) and the pack replacement lamp 32 is turned on at step S7. Consequently, the operator finds that the time for replacement of the pack B is near. Since the pack B in the cylinder 12 still contains an amount of ice cream A dispensed several times, the ice cream A can be dispensed several times thereafter.

When the ice cream A in the pack B has been used up, the heat-insulated door 3 is opened in order that the pack B in the cylinder 12 may be replaced by a new one. The door switch 39 is then turned off (NO at step S2) and the pump motor PM is rotated reversely to drive the pump 27 in the reverse direction at step S8. As a result, the brine X in the pressure chamber 17 of the cylinder 12 is sucked to be returned to the tank 25 side. When the pressure in the pressure chamber 17 becomes negative, the piston 13 moves downward or descends in the cylinder 12 such that the capacity of the pack-accommodating chamber 16 is gradually increased.

When the piston 13 descends to the lower end position as shown in FIG. 3A, the liquid level of the brine X in the tank 25 is increased to the position as shown in FIG. 3A, whereupon the upper float switch 35 is turned on (YES at step S9). As a result, the pump motor PM and accordingly the pump 27 are stopped at step S6. The lid 19 is detached so that the used pack B is taken out of the pack accommodating chamber 12 and a new pack B is set therein.

According to the foregoing embodiment, the pack replacement lamp 32 is turned on when a remaining amount of ice cream A becomes small. The lamp 32 thus informs the operator of the reduced amount of ice cream A. Thereafter, when the ice cream A has been used up, the door 3 is opened so that the pack B is replaced by a new one. Since the piston 13 of the cylinder 12 is automatically returned to the lower end position, the capacity of the pack-accommodating chamber 16 is increased. Consequently, the pack B can quickly be replaced by a new one.

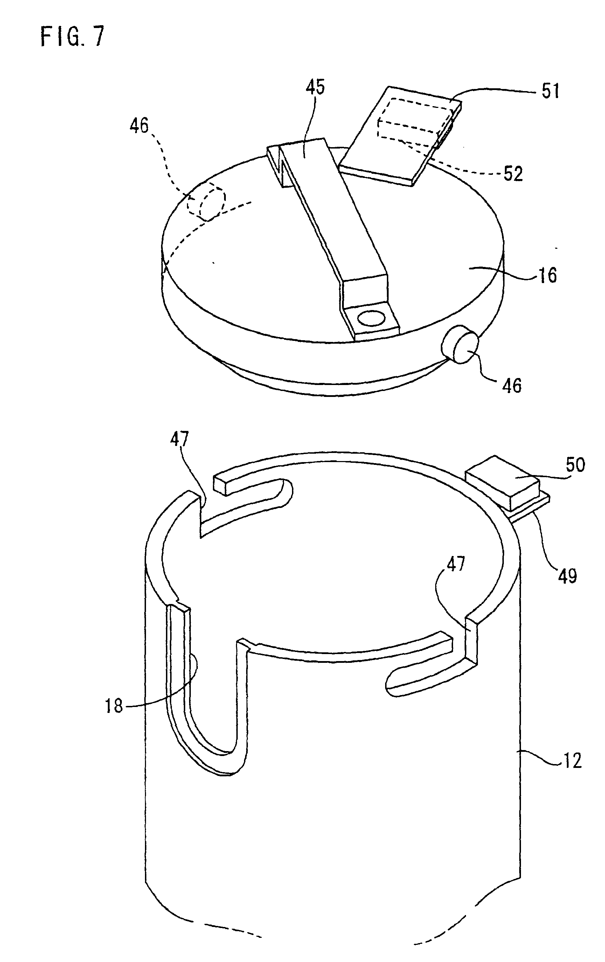

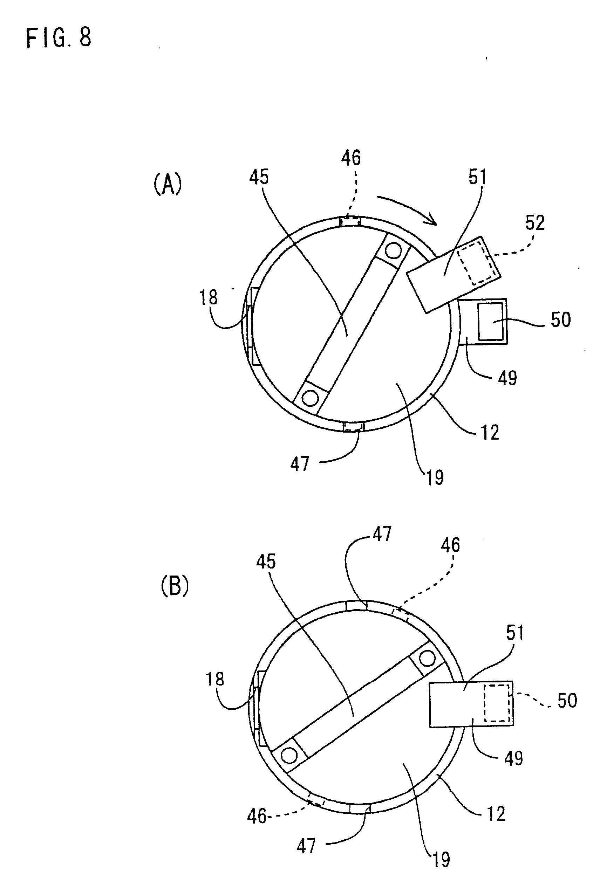

FIGS. 7 to 10 illustrate a second embodiment of the invention. In the foregoing embodiment, opening the door 3 is used as a trigger in the case where the piston 13 is caused to descend prior to replacement of the pack B. In the second embodiment, opening the lid 19 of the pack-accommodating chamber 16 is used as the trigger. FIGS. 7 and 8 illustrate the mounting structure of the lid 19. The lid 19 is formed into the shape of a thick disk and has a trapezoidal underside. The lid 19 is fitted in the upper end of the cylinder 12 and has a grip 45 mounted on an upper side thereof. The lid 19 has two pins 46 protruding from an outer circumference thereof at an interval of 180 degrees. The cylinder 12 has two generally J-shaped slots 47 formed in an upper edge thereof. The pins 46 are inserted into the respective slots 47. After the pins 46 are thrust into vertical grooves of the J-shaped slots 47, the lid 19 is turned clockwise as viewed in FIG. 8A while the pins 46 are moved toward the transverse grooves of the slots, respectively. As a result, the lid 19 is attached to the cylinder 12 so as to be prevented from falling off. The lid 19 assumes a normal closed position when the pins 46 are inserted deep in the transverse grooves of the slots 47 respectively.

A lid switch 50 comprising a reed switch is mounted on a bracket 49 which is further mounted on the side of the cylinder 12 so as to be opposed to the U-shaped groove 18. The lid 19 is provided with a magnet 52 mounted on a bracket 51 which is is located over the lid switch 50 to thereby turn the latter on.

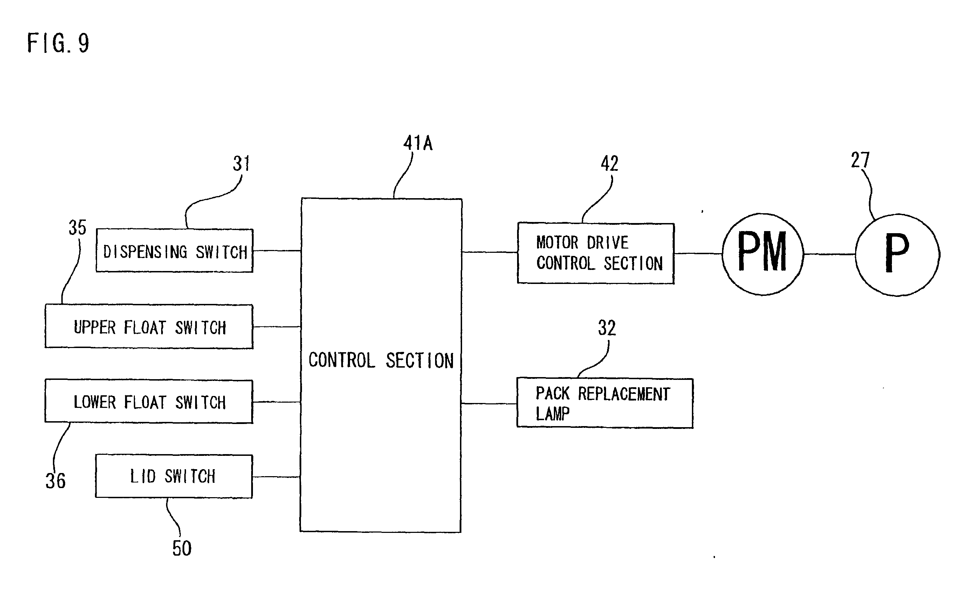

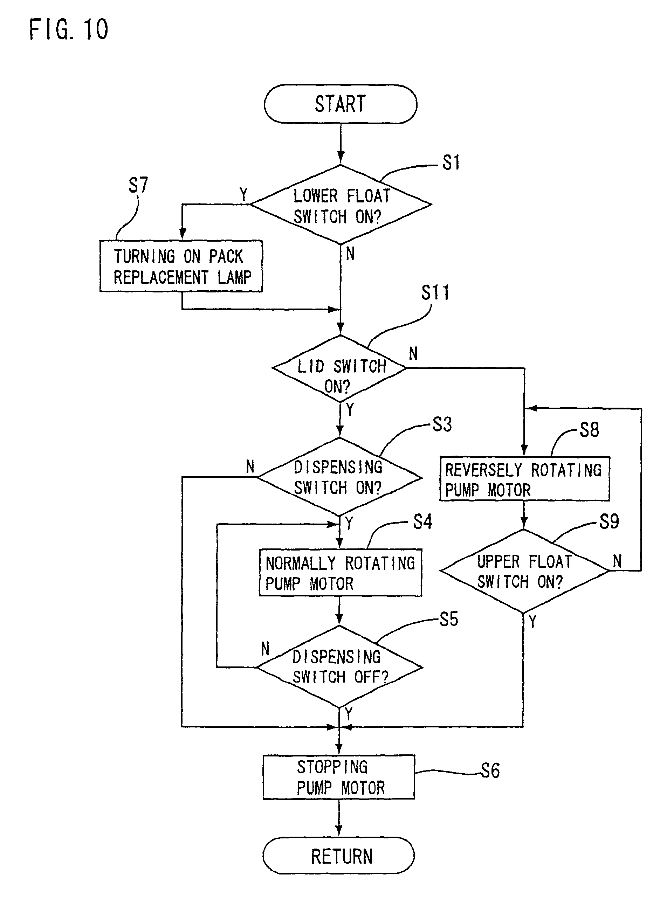

The lid switch 50 is connected to the input side of the control section 41A, instead of the door switch 39 in the first embodiment, as shown in FIG. 9. A program of the dispensing routine carried out by the control section 41A includes step S11 of determining whether the lid switch 50 is turned on or off, instead of step S2 in the first embodiment, as shown in FIG. 10. The other construction of the ice cream dispenser of the second embodiment is the same as in the first embodiment. The identical or similar parts are labeled by the same reference symbols in the second embodiment as in the first embodiment and accordingly, the description of these parts is eliminated.

The operation of the ice cream dispenser will be described. The control section 41A carries out the dispensing routine as shown in FIG. 10. When the piston 13 is located at a position lower than the upper detection position (NO at step S1) and the lid 19 of the pack-accommodating chamber 16 is closed (YES at step S11), the ice cream A is dispensed every time the dispensing switch 31 is turned on. As the dispensing of the ice cream A is repeated, the piston 13 reaches the upper detection position. Then, the lower float switch 36 is turned on so that the pack replacement lamp 32 is turned on. As a result, the pack B still contains an amount of ice cream A dispensed several times, and the operator finds that the time for replacement of the pack B is near.

When the ice cream A in the pack B has been used up by several times of dispensing, the heat-insulated door 3 is opened in order that the cylinder 12 may be taken out of the freezing compartment 2. The lid 19 of the pack-accommodating chamber 16 is opened for replacement of the pack B. Then, since the lid switch 50 is turned off (NO at step S11), the pump motor PM is reversely rotated such that the pump 27 is driven in the reverse direction (step S8). As the result of reverse drive of the pump 27, the brine X in the pressure chamber 17 is returned toward the tank 25 side. This causes the piston 13 to descend such that the capacity of the pack-accommodating chamber 16 is gradually increased. When the piston 13 assumes the lower end position, the upper float switch 35 is turned on to stop the pump 27. The used pack B is taken out of the chamber 16 to be replaced by a new one.

According to the second embodiment, the pack replacement lamp 32 is turned on when the remaining amount of ice cream A becomes small. The lamp 32 thus informs the operator of the reduced amount of ice cream A. Thereafter, when the ice cream A has been used up, the lid 19 of the pack-accommodating chamber 16 is opened so that the pack B is replaced by a new one. Since the piston 13 of the cylinder 12 is automatically returned to the lower end position, the capacity of the pack-accommodating chamber 16 is increased. Consequently, the pack B can quickly be replaced by a new one.

In the first embodiment, the heat-insulated door 3 is opened so that the piston 13 is automatically descended. The ice cream A can still be dispensed after the pack replacement lamp 32 has been turned on. In this case, when the operator opens the door 3 in order to confirm softness of a spare pack B of ice cream A stored in the freezing compartment 2, the piston 13 would automatically be descended even though the pack B need not be replaced by a new one yet. In the second embodiment, however, the trigger for the automatic descent of the piston 13 is opening the lid 19, which is a final work prior to takeout of the used pack B. Consequently, the warning for the replacement of the pack B can reliably be performed.

Although the float switch provided in the brine tank is used to detect the position of the piston in the foregoing embodiments, a reed switch may be provided on the outer circumference of the dispensing cylinder to directly detect the position of the piston, instead. Furthermore, another float switch for detecting the lower end position of the piston may be provided in the lower interior of the cylinder so as to depressed by the piston.

A buzzer may be provided as the warning means for urging replacement of the pack B, instead of the lamp. Furthermore, the re-supply detecting means may comprise locking means for locking the heat-insulated door in the closed state and a switch.

The present invention may be applied to a frozen dessert dispenser in which air is used as the operating fluid and air in the freezing compartment is supplied into and returned from the pressure chamber by a compressor etc.

The ice cream used in the foregoing embodiments includes soft ice cream and hard ice cream. Furthermore, the present invention may be applied to apparatus for dispensing other frozen desserts such as frozen yogurt or sherbet.

The foregoing description and drawings are merely illustrative of the principles of the present invention and are not to be construed in a limiting sense. Various changes and modifications will become apparent to those of ordinary skill in the art. All such changes and modifications are seen to fall within the scope of the invention as defined by the appended claims.

## Claims

1. A frozen dessert dispenser which comprises a cylinder (12) provided in a cold storage compartment (2), a piston (13) slidably mounted in the cylinder (12) so as to divide an interior thereof into an accommodating chamber (16) accommodating frozen dessert (A) and a pressure chamber (17), and fluid supplying means (27) for supplying an operating fluid (X) into the pressure chamber (17) so that the piston (13) is subjected to the pressure in the pressure chamber (17) to be moved, thereby dispensing the ice cream (A) from the accommodating chamber (16), **characterized by**:
piston position detecting means (36) for detecting the piston (13) assuming a predetermined forward position, thereby delivering a position signal;
warning means (32) for warning to prompt re-supply of frozen dessert (A) into the accommodating chamber (16) on the basis of the position signal delivered by the piston position detecting means (36);
re-supply detecting means (39) for detecting re-supply of *frozen* dessert (A) into the accommodating chamber (16), thereby delivering an operation signal; and
fluid sucking means (27) for sucking the operating fluid (X) from the pressure chamber (17) for moving back the piston (13) when receiving the operation signal from the re-supply detecting means (39) on condition that the position signal has been delivered by the piston position detecting means (36).

2. The frozen dessert dispenser according to claim 1, further **characterized by** a door (3) hingedly mounted to close and open the cold storage compartment (2), and **characterized in that** the re-supply detecting means (39) comprises a door switch (39) for detecting an open or closed state of the door (3), and that the fluid sucking means (27) is operated when receiving an open state signal from the door switch (39).

3. The frozen dessert dispenser according to claim 1, **characterized in that** the cylinder (12) includes a lid (19) detachably attached to an open end thereof at the accommodating chamber side so as to close and open the end, that the re-supply detecting means (39) comprises a lid switch (50) for detecting a closed or open state of the lid (19), and that the fluid sucking means (27) is operated when receiving an open state signal from the lid switch (50).

4. The frozen dessert dispenser according to any one of claims 1 to 3, **characterized by** a tank (25) for storing the operating fluid (X) and in that the operating fluid (X) is a liquid supplied from the tank (25) into the pressure chamber (17) and that the piston position detecting means (36) comprises a float switch (36) provided in the tank (25).
